# EUROPEAN PATENT APPLICATION

(11) **EP 4 661 159 A1**
(43) Date of publication of application: **10.12.2025**
(21) Application number: 25176708.3
(22) Date of filing: 15.05.2025
(51) Int. Cl.: H01M 10/48, H01M 50/503, H01M 50/507

(54) **BATTERY MODULE, BATTERY PACK INCLUDING THE SAME, AND ASSEMBLING METHOD OF THE BATTERY PACK**

(30) Priority: 16.05.2024 KR 20240063904
(71) Applicant: SK On Co., Ltd., Seoul 03161 (KR)
(72) Inventor: KIM, Jae In, Daejeon 34124 (KR); KIM, Se Hyeon, Daejeon 34124 (KR)
(74) Representative: Prüfer & Partner mbB Patentanwälte · Rechtsanwälte

(57) **Abstract**

The present disclosure relates to a battery module, a battery pack including the same, and an assembling method of the battery pack. The battery module includes a plurality of battery cells arranged in a predetermined stacking direction, a busbar electrically connecting the plurality of battery cells, a sensor electrically connected to the plurality of battery cells through the busbar, and a cell detector measuring voltages or currents in the plurality of battery cells by the sensor, wherein the cell detector is arranged in a first area provided on a side of the plurality of battery cells.

## Description

### BACKGROUND OF THE INVENTION

### 1. Field

The disclosure relates to a battery module, a battery pack including the same, and an assembling method of the battery pack, and more specifically, to a battery module having improved ease of assembly and improved thermal stability, a battery pack including the battery module, and a method of assembling the battery pack.

### 2. Description of the Related Art

From the perspective of a battery pack, a partition structure which completely separates one battery module from another battery module is adopted for thermal stability. To this end, a Cell Monitoring Unit (CMU) and a Battery Management System (BMS) tend to be wirelessly connected to each other. As compared to when the CMU is connected by wire, however, components such as wireless communication modules may be added to cause an increase in size.

In contrast, considering the space efficiency of the battery pack and the interference between the CMU and the venting path of gas during thermal runaway, it may be better to reduce the size of the CMU. However, the reduction in size of the CMU may result in increases in difficulty of assembly and assembly cost.

### SUMMARY

An object of the present disclosure is to improve stability of a battery module and/or a battery pack even when thermal runaway of a battery cell occurs.

Another object of the present disclosure is to reduce interference between a movement path of gas generated during thermal runaway of the battery cell and other components.

Another object of the present disclosure is to improve the ease of assembly of the battery module and/or the battery pack.

Another object of the present disclosure is to efficiently utilize dead space of the battery pack.

Meanwhile, the present disclosure may be widely applied in the fields of electric vehicles, battery charging stations, energy storage systems (ESS), and other green technologies such as photovoltaics and wind power using batteries. In addition, the present disclosure may be used in eco-friendly mobility, including electric vehicles and hybrid vehicles, to prevent climate change by suppressing air pollution and greenhouse fluid emissions.

A battery module according to embodiments of the present disclosure includes a plurality of battery cells arranged in a predetermined stacking direction, a busbar electrically connecting the plurality of battery cells, a sensor electrically connected to the plurality of battery cells through the busbar, and a cell detector measuring voltages or currents in the plurality of battery cells by the sensor, wherein the cell detector is arranged in a first area provided on a side of the plurality of battery cells.

The battery module may further include a side cover portion forming a side surface of an accommodation space accommodating the plurality of battery cells, and a support portion protruding from the side cover portion in a direction away from the plurality of battery cells to support the cell detector when the cell detector is located in the first area.

The cell detector may include a circuit portion connected to the sensor, and a housing accommodating the circuit portion therein.

The support portion may include a coupling hole formed in the support portion in a height direction perpendicular to the predetermined stacking direction, the cell detector may include an engaging portion protruding from the housing, and the cell detector may be coupled to the support portion by inserting the engaging portion into the coupling hole.

The engaging portion may be provided in a hook shape, and the engaging portion may be hook-coupled to the coupling hole.

The housing may include a first body in contact with the support portion, and a second body coupled to the first body and accommodating the circuit portion inside, together with the first body.

The side cover portion may include a venting hole penetrating at least a portion of the side cover portion.

The cell detector may be located above the venting hole in a height direction perpendicular to the predetermined stacking direction.

The first area may be located between the second area and the venting hole.

The battery module may further include a connection member including a flexible material and electrically connecting the sensor and the cell detector.

The connection member may extend from the sensor toward the cell detector and have a strip shape.

The connection member may include a first surface facing the plurality of battery cells, and a second surface located in a direction opposite to the first surface and coupled to the first surface, and when the cell detector is located in the second area, at least a portion of the connection member may be bent such that the second surface faces the first surface.

Each of the plurality of battery cells may include an electrode assembly producing or storing electrical energy, a cell case accommodating the electrode assembly, and a first lead tab portion and a second lead tab portion protruding from the cell case and electrically connecting the electrode assembly and the busbar, the sensor may include a first sensing terminal electrically connected to the first lead tab, and a second sensing terminal electrically connected to the second lead tab, and the cell detector may be electrically connected to the first sensing terminal and the second sensing terminal.

The battery module may further include a side cover portion including a first side cover and a second side cover facing each other while interposing the plurality of battery cells in the stacking direction, and the cell detector may be located close to one of the first side cover and the second side cover.

The busbar may include a first busbar electrically connected to the first lead tab portion, and a second busbar electrically connected to the second lead tab, and the cell detector may be located close to one of the first busbar and the second busbar.

A battery pack according to embodiments of the present disclosure includes a plurality of battery cells, a busbar electrically connecting the plurality of battery cells, a sensor electrically connected to the plurality of battery cells through the busbar, a cell detector measuring voltages or currents in the plurality of battery cells by the sensor, a pack case accommodating the plurality of battery cells, the busbar, the sensor, and the cell detector, and a controller provided in the pack case and exchanging an electrical signal with the cell detector, wherein the cell detector is located in a first area provided between a side surface of the pack case and the plurality of battery cells.

The controller and the cell detector may wirelessly exchange the electrical signal.

A method of assembling a battery pack including a plurality of battery cells, a cell detector measuring voltages or currents in the plurality of battery cells, and a pack case accommodating the plurality of battery cells and the cell detector according to embodiments of the present disclosure includes arranging the cell detector in a second area formed above the plurality of battery cells in a height direction of the pack case to accommodate the plurality of battery cell in the pack case, and arranging the cell detector in a first area formed between the plurality of battery cells and the pack case.

### BRIEF DESCRIPTION OF THE DRAWINGS

FIG. 1 is illustrates an example of a battery module according to the present disclosure.
FIG. 2 illustrates an example of a battery cell according to the present disclosure.
FIG. 3 is an exploded view of an example of a battery module according to the present disclosure.
FIG. 4 illustrates an example of a connection member, a sensor, and a cell detector according to the present disclosure.
FIG. 5 is an enlarged view of an example of a cell detector located in a first area.
FIG. 6 shows an example of a support portion according to the present disclosure as viewed from a front of a busbar assembly.
FIG. 7 shows an example of a support portion according to the present disclosure as viewed from one side.
FIG. 8 illustrates an example of a support portion according to the present disclosure.
FIG. 9 is a diagram illustrating an example of a cell detector according to the present disclosure.
FIG. 10 illustrates an example in which an engaging portion and a coupling hole according to the present disclosure are coupled.
FIG. 11 illustrates an example in which a cell detector is disposed in a first area after a battery module according to the present disclosure is accommodated in a battery pack.
FIG. 12 illustrates an example of a cell detector, a support portion, and a venting hole according to the present disclosure.
FIG. 13 illustrates an example in which a cell detector is disposed in a second area after a battery module according to the present disclosure is accommodated in a battery pack.
FIG. 14 illustrates an example of a battery pack according to the present disclosure.

### DETAILED DESCRIPTION

Hereinafter, preferred embodiments of the present disclosure will be described in detail with reference to the attached drawings. The configuration or control method of the device described below is only for explaining the embodiments of the present disclosure and is not intended to limit the scope of the present disclosure, and the same reference numerals used throughout the specification indicate the same components.

The use of terms such as 'first, second, and third' in front of the components mentioned below is only to avoid confusion about the components to which they are referred and is irrelevant to the order, importance, or master-slave relationship between the components, etc. For example, an present disclosure that includes only a second component without a first component may also be implemented.

As used in this specification, singular expressions include plural expressions unless the context clearly dictates otherwise.

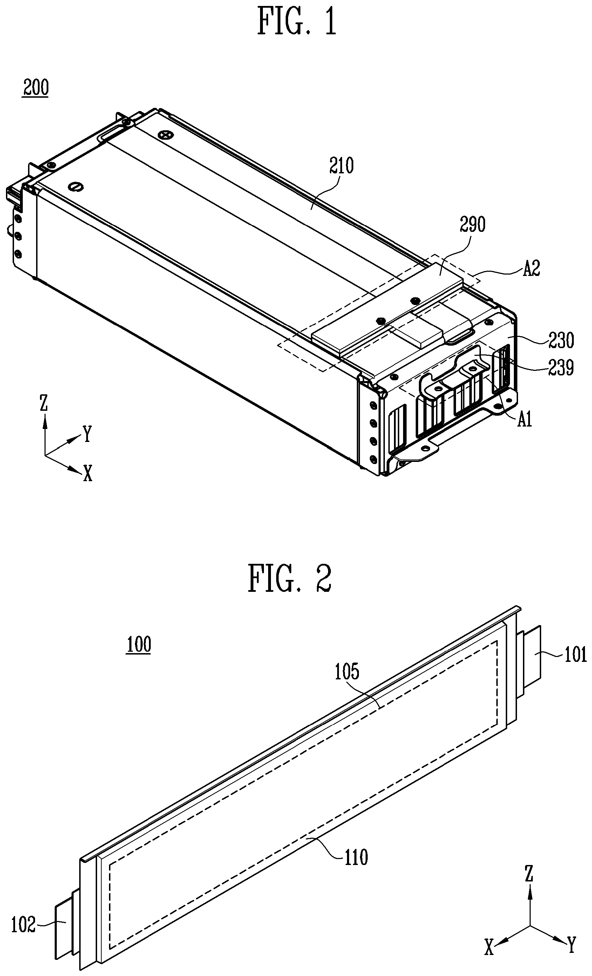

FIG. 1 illustrates an example of a battery module 200 according to the present disclosure.

The battery module 200 according to the present disclosure may include a plurality of battery cells 100 (see FIG. 2), a side cover portion 230 which protects one side surface of the plurality of battery cells 100, and a support cover portion 210 which is located above the plurality of battery cells 100 in a height direction (a Z direction) of the plurality of battery cells 100.

In addition, the battery module 200 may include a first area A1 located outside the side cover portion 230. The battery module 200 may include a second area A2 formed on an upper side of the plurality of battery cells 100.

More specifically, the second area A2 may be formed in the support cover portion 210.

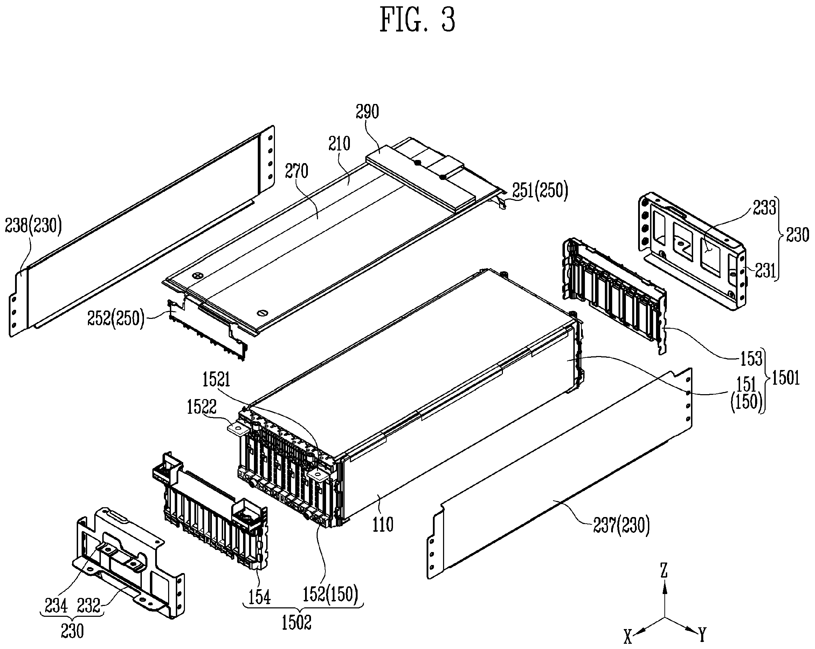

The battery module 200 may include a cell detector 290 which is located in one of the first area A1 and the second area A2. The cell detector 290 may calculate magnitudes of voltages and currents in the plurality of battery cells 100 through a sensor 250 (see FIG. 3) electrically connected to the plurality of battery cells 100.

In addition, the battery module 200 may further include a support portion 239 protruding outward from the side cover portion 230 to support the cell detector 290 in the first area A1.

The support portion 239 may protrude away from the plurality of battery cells 100 from at least one side surface forming the side cover portion 230.

FIG. 2 illustrates an example of the battery cell 100 according to the present disclosure.

Referring to FIG. 2, the battery cell 100 according to the present disclosure may include an electrode assembly 105 which produces or stores electrical energy, a cell case 110 which accommodates the electrode assembly 105, and a first lead tab portion 101 and a second lead tab portion 102 which protrude from the cell case 110 to electrically connect the electrode assembly 105 and a busbar 150.

The electrode assembly 105 may include a sheet-shaped anode coated with a positive electrode active material, a sheet-shaped cathode coated with a negative electrode active material, and a separator disposed between the anode and the cathode.

Referring to FIG. 2, the first lead tab portion 101 and the second lead tab portion 102 protrude in opposite directions. Alternatively, however, the first lead tab portion 101 and the second lead tab portion 102 may protrude in the same direction.

FIG. 3 is an exploded view of an example of the battery module 200 according to the present disclosure.

The battery module 200 according to the present disclosure includes the plurality of battery cells 100 disposed in a predetermined stacking direction, the busbar 150 extending in the stacking direction to electrically connect the plurality of battery cells 10, the sensor 250 electrically connected to the plurality of battery cells 100, and the cell detector 290 which measures a voltage or a current of the plurality of battery cells 100 by the sensor 250, and the cell detector 290 may be disposed in the first area A1 formed on one side of the plurality of battery cells 100.

In addition, the battery module 200 according to the present disclosure may further include the side cover portion 230 which forms a side surface of the accommodation space accommodating the plurality of battery cells 100.

Referring to FIG. 3, the plurality of battery cells 100 may be arranged in the predetermined stacking direction (a Y direction). Although FIG. 3 illustrates the plurality of battery cells 100 as pouched-type battery cells, the shape of the plurality of battery cells 100 is not limited thereto. For example, the battery cell 100 may have a cylindrical shape or a prismatic shape. When the shape of the battery cell 100 is cylindrical or prismatic, the lead tab portions 101 and 102 of the present disclosure may refer to terminal portions of the cylindrical battery cell or the prismatic battery cell.

In addition, FIG. 3 illustrates an example of the stacking direction of the plurality of battery cells 100, and the stacking direction may vary depending on the design. In addition, the shape of a module case (not shown) forming an accommodation space for accommodating the plurality of battery cells 100 may also vary.

For example, the plurality of battery cells 100 may be arranged in an X direction, and the module case may be formed in an angled U-shape or a channel shape. That is, both ends of the module case may be opened in the X direction, and an upper surface thereof may be opened. In addition, the module case may include a receiving bottom surface (not shown) for receiving the plurality of battery cells 100, and receiving side surfaces (not shown) extending in the Z direction from both edges parallel to the X direction on the receiving bottom surface.

The busbar 150 may be electrically connected to the plurality of battery cells 100. In order to output a desired voltage from the battery module 200, the busbar 150 may connect the plurality of battery cells 100 in a series or parallel connection manner as designed. For example, after the plurality of battery cells 100 are grouped in a predetermined number, each of the battery cells 100 belonging to each group may be connected in series, and the groups may be connected in parallel. The busbar 150 may be a single plate or may include a plurality of plates for electrical connection.

The busbar 150 may be electrically connected to both lead tab portions 101 and 102 or terminal portions (not shown) provided in the plurality of battery cells 100. Referring to FIG. 2, the busbar 150 may further include a slit hole into which the first lead tab portion 101 or the second lead tab portion 102 is inserted.

Referring to FIG. 3, the battery module 200 may further include busbar frames 153 and 154 for supporting and protecting the busbar 150. The busbar frames 153 and 154 may further include a hole or a groove into which the first lead tab portion 101 or the second lead tab portion 102 is inserted.

Specifically, the busbar 150 may include a first busbar 151 electrically connected to the first lead tab portion 101 and a second busbar 152 electrically connected to the second lead tab portion 102. In addition, the first busbar 151 and the second busbar 152 may include slit holes (not shown) passing through the first busbar 151 and the second busbar 152, respectively. The first lead tab portion 101 or the second lead tab portion 102 is inserted into the slit hole.

Similarly, the busbar frames 153 and 154 may include a first busbar frame 153 facing the first busbar 151 and a second busbar frame 154 facing the second busbar 152. In addition, the first busbar frame 153 and the second busbar frame 154 may each include grooves or holes into which the first lead tab portion 101 and the second lead tab portion 102 are inserted.

Referring to FIG. 3, the first busbar 151 and the first busbar frame 153 may be collectively referred to as a first busbar assembly 1501. Similarly, the second busbar 152 and the second busbar frame 154 may be collectively referred to as a second busbar assembly 1502.

The side cover portion 230 may protect side surfaces of the plurality of battery cells 100. To this end, the side cover portion 230 may be provided to face the busbar 150.

The side cover portion 230 may further include the venting holes 233 and 234 penetrating at least a part of the side cover portion 230 in a direction (the X direction) perpendicular to the stacking direction (the Y direction) and the height direction (the Z direction).

Referring to FIGS. 2 and 3, since the first lead tab portion 101 and the second lead tab portion 102 protrude in opposite directions to each other, the side cover portion 230 may include a first side cover 231 disposed in the stacking direction perpendicular to the protruding direction of the first lead tab portions 101 and a second side cover 232 disposed in the stacked direction perpendicular to the protruding direction of the second lead tab portions 102.

In addition, the venting holes 233 and 234 may include a first venting hole 233 and a second venting hole 234 passing through the first side cover 231 and the second side cover 232, respectively, in a direction in which the first lead tab portion 101 and the second lead tab portion 102 protrude. In this specification, the first venting hole 233 and the second venting hole 234 are referred to as the venting holes 233 and 234 unless it is particularly necessary to distinguish the venting holes.

The side cover portion 230 may further include side panels 237 and 238 coupled to the first side cover 231 and the second side cover 232 in a direction from the first side cover 221 toward the second side cover 222.

The side panels 237 and 238 will be located on the outermost side of the plurality of battery cells 100 in the stacking direction.

The battery module 200 according to the present disclosure may include the sensor 250 and the cell detector 290 for managing the plurality of battery cells 100.

The sensor 250 may be electrically connected to the plurality of battery cells 100. The cell detector 290 may be electrically connected to the sensor 250 to sense the magnitudes of voltages and currents in the plurality of battery cells 100 by the sensor 250. In addition, the cell detector 290 may calculate the temperature or humidity of the plurality of battery cells 100 by the sensor 250. Therefore, the sensor 250 may manage the states of the plurality of battery cells 100.

Referring to FIG. 3, the sensor 250 may include a first sensing terminal 251 electrically connected to the first lead tab portion 101 and a second sensing terminal 252 electrically connected to the second lead tab portion 102, and the cell detector 290 may be electrically connected to first sensing terminal 251 and the second sensing terminal 252.

The battery module 200 according to the present disclosure may further include a connection member 270 including a flexible material which electrically connects the sensor 250 and the cell detector 290 to each other.

More specifically, each of the plurality of battery cells 100 may include the electrode assembly 105 producing or storing electrical energy, the cell case 110 accommodating the electrode assembly 105, and the first lead tab portion 101 and the second lead tab portion 102 protruding from the cell case 110 to electrically connect the electrode assembly 105 and the busbar 150.

In addition, the sensor 250 may include the first sensing terminal 251 electrically connected to the first lead tab portion 101 and the second sensing terminal 252 electrically connected to the second lead tab portion 102, and the cell detector 290 may be electrically connected to the first sensing terminal 251 and the second sensing terminal 252.

The sensor 250 may measure voltages and currents in the plurality of battery cells 100 through the first sensing terminal 251 and the second sensing terminal 252.

Referring to FIG. 2, the connection member 270 extends from the sensor 250 toward the cell detector 290 and may have a strip shape.

Referring to FIGS. 1 and 3, the cell detector 290 may be located in the first area A1 or the second area A2. The first area A1 may be formed outside the side cover portion 230, and the second area A2 may be provided above the plurality of battery cells 100.

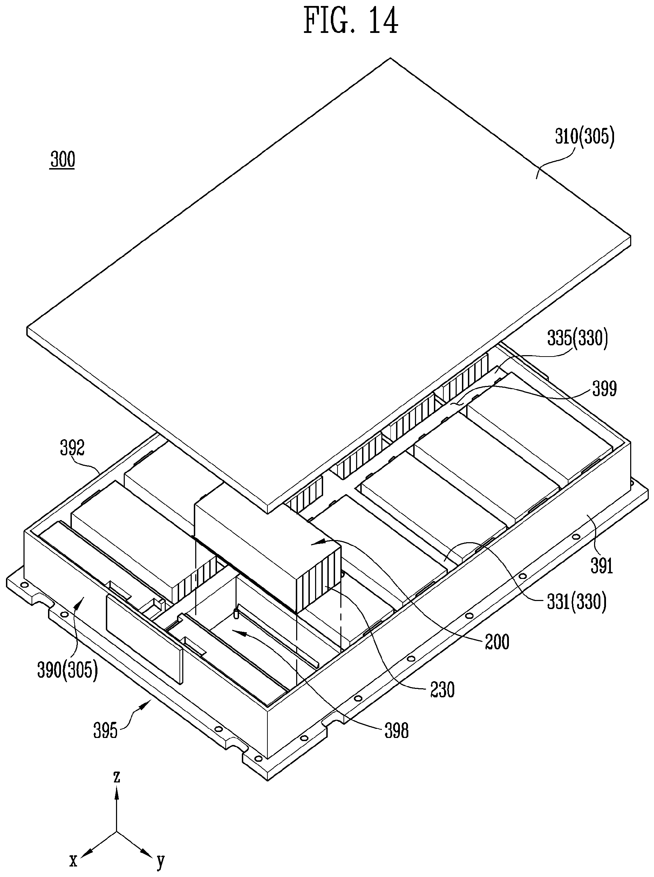

The battery module 200 may be accommodated in a battery pack 300 (see FIG. 14) to be described below. The cell detector 290 may be disposed in the second area A2 when the cell detector 290 is accommodated in the battery pack 300. After the cell detector 290 is accommodated in the battery pack 300, the position of the cell detector 290 may be moved from the second area A2 to the first area A1. In this manner, assembly difficulty when the battery module 200 is mounted on the battery pack 300 may be reduced.

Referring to FIGS. 1 and 3, the support portion 239 may protrude outward of the first side cover 231 or the second side cover 232, depending on the position of the cell detector 290.

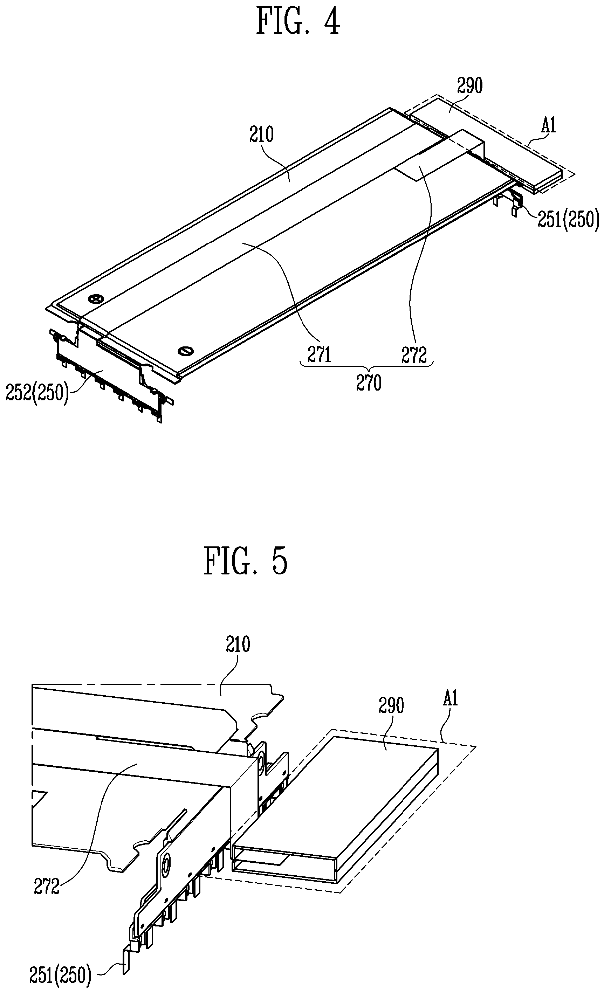

FIG. 4 illustrates an example of the connection member 270, the sensor 250, and the cell detector 290 according to the present disclosure.

More specifically, FIG. 4 shows that the cell detector is located in the first area A1.

Referring to FIGS. 3 and 4, the battery module 200 according to the present disclosure may further include the side cover portion 230 including the first side cover 231 and the second side cover 232 facing each other with the plurality of battery cells 100 interposed therebetween in the stacking direction. The cell detector 290 may be located close to one of the first side cover 231 and the second side cover 232.

Similarly, the busbar 150 may include the first busbar 151 electrically connected to the first lead tab portion 101 (see FIG. 3) and a second busbar 152 electrically connected to the second lead tab portion 102 (see FIG. 3), and the cell detector 290 may be located close to one of the first busbar 151 and the second busbar 152.

Referring to FIGS. 3 and 4, the sensor 250 may include the first sensing terminal 251 and the second sensing terminal 252 connected to respective lead tab portions or respective terminal portions of the plurality of battery cells.

The first sensing terminal 251 may be electrically connected to each of the first lead tab portions 101 of the plurality of battery cells 100 through the first busbar 151, and the second sensing terminal 252 may be connected to each of the second lead tab portions 102 of the plurality of batteries 100 through the second busbar 152.

The battery module 200 according to the present disclosure may include the connection member 270 electrically connecting the first sensing terminal 251 and the second sensing terminal 252 to the cell detector 290.

Since the space in which the battery module 200 is formed in the battery pack 300 is narrow, the connection member 270 may be flat. For example, the connection member 270 may be a flexible printed circuit board (FPCB). Therefore, at least a part of the connection member 270 may be bent so as to be connected to the cell detector 290.

The connection member 270 may include a first strip 271 extending in a direction from the first sensing terminal 251 toward the second sensing terminal 252, and a second strip 272 connecting the first strip 271 and the cell detector 290.

The cell detector 290 may be electrically connected to the first sensing terminal 251 and the second sensing terminal 252 through the first strip 271 and the second strip 272. In addition, since the second strip 272 may be bent, the cell detector 290 may be located in one of the first area A1 and the second area A2 without adding or changing other components.

FIG. 5 is an enlarged view of an example of the cell detector 290 located in the first area.

The cell detector 290 may be located close to one of the first sensing terminal 251 and the second sensing terminal 252. FIG. 5 illustrates an example in which the cell detector 290 or the first area A1 is located closer to the first sensing terminal 251 and the first busbar 151 than the second sensing terminal 252 and the second busbar 152. However, this is only an example, and depending on the design, the cell detector 290 or the first area A1 may be located closer to the second sensing terminal 252 and the second busbar 152 than the first sensing terminal 251 and the first busbar 151.

That is, the cell detector 290 may be located close to one of the first side cover 231 and the second side cover 232.

The cell detector 290 may be located close to one busbar 150 between the first busbar 151 and the second busbar 152.

The second strip 272 extends parallel to the support cover portion 210 toward the cell detector 290, and may be bent or curved so as to be connected to the cell detector 290.

The cell detector 290 or the first area A1 may be located below the support cover portion 210 in the height direction. On the other hand, the cell detector 290 may be located closer to the support cover portion 210 than the lowermost side of the first sensing terminal 251.

Referring to FIG. 5, the cell detector 290 may be spaced apart from the first sensing terminal 251 in a direction in which the first lead tab portion 101 or the second lead tab portion 102 protrudes. Alternatively, the cell detector 290 may be spaced apart from the first busbar 151.

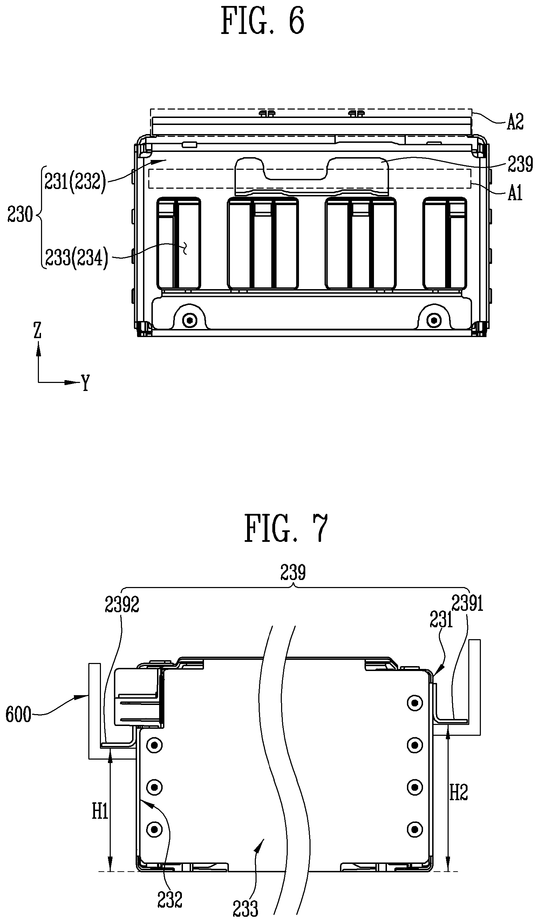

FIG. 6 shows an example of the support portion 239 according to the present disclosure from the front of the busbar assembly.

Referring to FIGS. 3 and 6, the battery module 200 according to the present disclosure includes the plurality of battery cells 100 disposed in the predetermined stacking direction, the busbar 150 extending in the stacking direction to electrically connect the plurality of battery cells 10, the sensor 250 electrically connected to the plurality of battery cells 100, and the cell detector 290 measuring voltages or currents in the plurality of battery cells 100 by the sensor 250, and the cell detector 290 may be disposed in the first area A1 formed on one side of the plurality of battery cells 100.

In addition, the battery module 200 according to the present disclosure may further include the side cover portion 230 forming a side surface of the accommodation space accommodating the plurality of battery cells 100, and the support portion 239 protruding from the side cover portion 230 in a direction away from the plurality of battery cells 100 to support the cell detector 290 when the cell detector 290 is located in the first area A1.

Referring to FIG. 6, for example, to support the cell detector 290, the support portion 239 may protrude outward from the first side cover 231. The support portion 239 may form the first area A1. The support portion 239 may be a bracket or a flange having an L-shape in a cross section.

In addition, the side cover portion 230 may include the venting holes 233 and 234 penetrating at least a portion of the side cover portion 230.

More specifically, the first side cover 231 may include the first venting hole 233 passing through the first side cover 221. The second side cover 232 may include the second venting hole 234 passing through the second side cover 231.

Referring to FIG. 6, the first area A1 may be located above the venting holes 233 and 234 in the height direction perpendicular to the stacking direction.

That is, referring to FIG. 6, the first area A1 may be located between the second area A2 and the venting holes 233 and 234.

FIG. 7 shows an example of the support portion 239 according to the present disclosure from one side.

Referring to FIG. 7, the battery module 200 may include the support portion 239 protruding outward of the side cover portion 230. The support portion 239 may include a first support member 2391 protruding from the first side cover 231 and a second support member 2392 protruding from the second side cover 232.

Each of the first support member 2391 and the second support member 2392 may have an L-shape in a cross section.

The battery module 200 according to the present disclosure may be accommodated in the battery pack 300 (see FIG. 14) and mounted in the battery pack 300. In consideration of productivity, the battery module 200 may be assembled outside the battery pack 300 and then mounted in the battery pack 300.

When the cell detector 290 is mounted in the battery pack 300 while the cell detector 290 is located in the first area A1 (or coupled to the first support member 2391 and the second support member 2392), the cell detector 290 may interfere with other components of the battery pack 300 during assembly. Therefore, in order to protect the cell detector 290, the cell detector 290 may be accommodated in the battery pack 300 while the cell detector 290 is located in the second area A2 (or above the plurality of battery cells 100 or above the support cover portion 210).

Thereafter, the cell detector 290 may be moved to the second area A2. That is, the cell detector 290 may be coupled to the first support member 2391 or the second support member 2392. In this manner, the difficulty of assembling the battery module 200 to be mounted on the battery pack 300 may be reduced.

Referring to FIGS. 6 and 7, the cell detector 290 may be located above the venting holes 233 and 234, which may prevent interference with the cell detector 290 when gas generated during thermal runaway of at least one of the plurality of battery cells 100 is discharged through the venting holes 233 and 234. The interference between the cell detector 290 and the gas means that the cell detector 280 blocks at least a part of the venting path of the gas to change the movement direction of some of the gas.

When the cell detector 290 is positioned to overlap with the venting holes 233 and 234 and interferes with the movement path of the gas, the cell detector 290 may be quickly damaged by the high-temperature gas. In addition, since the venting holes 233 and 234 may be partially blocked by the cell detector 290, the gas may not be discharged smoothly.

Referring to FIG. 7, in order to accommodate the battery module 200 in the battery pack 300, a moving jig 600 may be used in which the first support member 2391 and/or the second support member 2392 is mounted to move the battery module 200.

Referring to FIG. 7, the first support member 2391 and the second support member 2392 may have different heights.

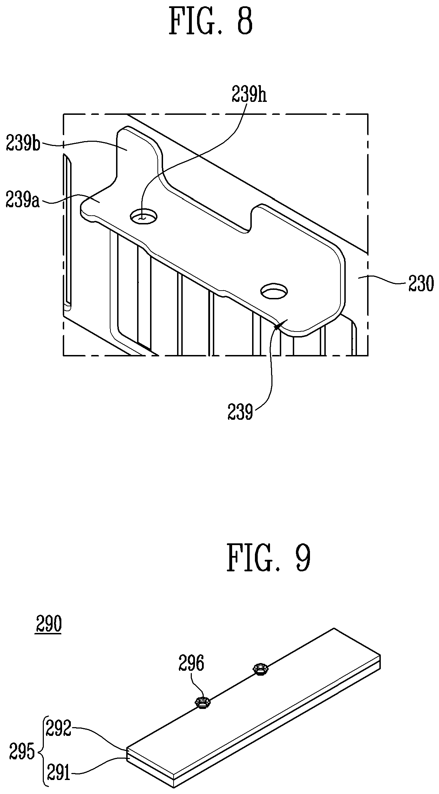

FIG. 8 illustrates an example of the support portion 239 according to the present disclosure.

Referring to FIG. 8, the support portion 239 may protrude from the outside of the side cover portion 230. The support portion 239 may include a coupling surface 239b coupled to the side cover portion 230 and a support surface 239a extending in a direction away from the side cover portion 220 from one end of the coupling surface 239a.

**In** addition, the support portion 239 may include a coupling hole 239h formed in the support portion 239 in the height direction for coupling with the cell detector 290. More specifically, the coupling hole 239h may be formed through the support surface 239a.

The description of the coupling hole 239h, the support surface 239a, and the coupling surface 239b applies equally to each of the first support member 2391 and the second support member 2392.

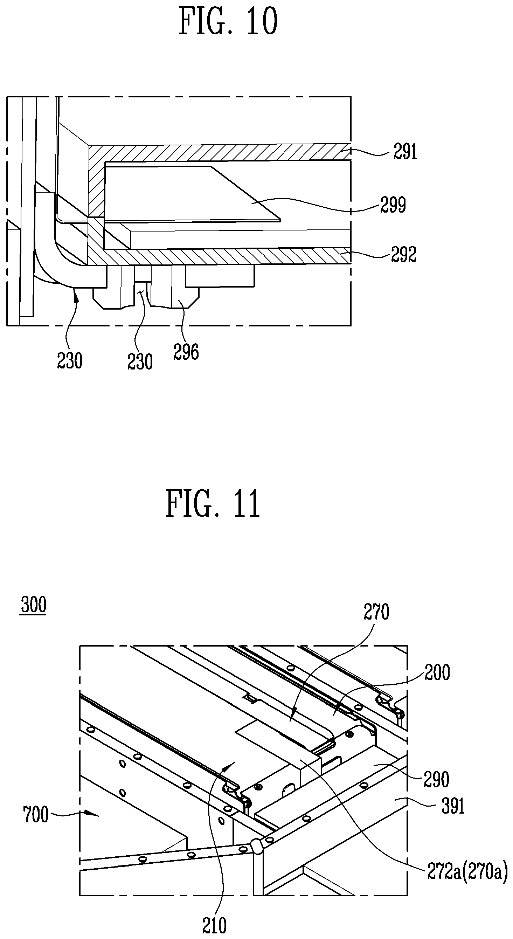

FIG. 9 is a diagram illustrating an example of the cell detector 290 according to the present disclosure. FIG. 10 illustrates an example in which an engaging portion and a coupling hole according to the present disclosure are coupled to each other.

More specifically, FIG. 9 illustrates an example in which the cell detector 290 is located in the first area A1. In contrast, FIG. 10 illustrates an example in which the cell detector 290 is located in the second area A2.

Referring to FIGS. 9 and 10, the cell detector 290 may include a circuit portion 299 connected to the sensor 250, and a housing 295 accommodating the circuit portion 299 therein.

The housing 295 may include a first body 291 in contact with the support portion 239, and a second body 292 coupled to the first body 291 to receive the circuit portion 299 therein together with the first body 292.

The circuit portion 299 is electrically connected to the connection member 270, and may be protected from external impact or vibration by the housing 295.

In order to move the cell detector 290 located in the second area A2 to the first area A1 without any other connection to the cell detector 290, the connection member 270 may include a flexible material and may be bent when necessary. In addition, relative positions of the first body 291 and the second body 292 in the first area A1 may be opposite to relative positions of the first and second bodies 291 and 292 in the second area A2.

That is, the cell detector 290 may be inverted when moving from the first area A1 to the second area A2. In this manner, unnecessary operations such as re-connecting the connection member 270 and the cell detector 290 after being separated may be eliminated.

Referring to FIGS. 8 and 10, the support portion 239 includes the coupling hole 239h formed in the support portion 299 in the height direction perpendicular to the stacking direction, the cell detector 290 includes an engaging portion 296 protruding from the housing 295, and the cell detector 280 may be coupled to the support portion 239 by inserting the engaging portion 299 into the coupling hole 239h.

In addition, the engaging portion 296 is provided in a hook shape, and the engaging portion 299 may be hooked to the coupling hole 239h. However, this is only an example, and a manner in which the cell detector 290 is coupled to the support portion 239 may be variously modified.

Referring to FIGS. 9 and 10, it may be seen that in the first area A1, the engaging portion 296 faces upward in the height direction, while in the second area A2, the engaging portion 296 engages with the support portion 239 and faces downward by.

FIG. 11 illustrates an example in which the cell detector 290 is disposed in the first area A1 after the battery module 200 according to the present disclosure is accommodated in the battery pack 300.

The battery module 200 may be mounted in the battery pack 300. Since the internal space of the battery pack 300 is limited, it is necessary to efficiently utilize the internal space of the battery pack 300.

When the cell detector 290 is located on the upper side (e.g., the second area A2) of the battery module 200, the height of the battery pack 300 may be increased, and the space other than the cell detector 290 on the upper side of the battery module 200 may be unnecessarily wasted.

Preferably, the cell detector 290 is located between the plurality of battery cells 100 and pack side surfaces 391, 392, 393, and 394 forming one side surface of the battery pack 300. To this end, the support portion 239 may be located between the side cover portion 230 and the pack side surfaces 391, 392, 393, and 394.

Alternatively, the first area A1 may be formed between the side cover portion 230 and the pack side surfaces 391, 392, 393, and 394.

The connection member 270 may be bent to electrically connect the sensor 250 and the cell detector 290 located in the second area A2.

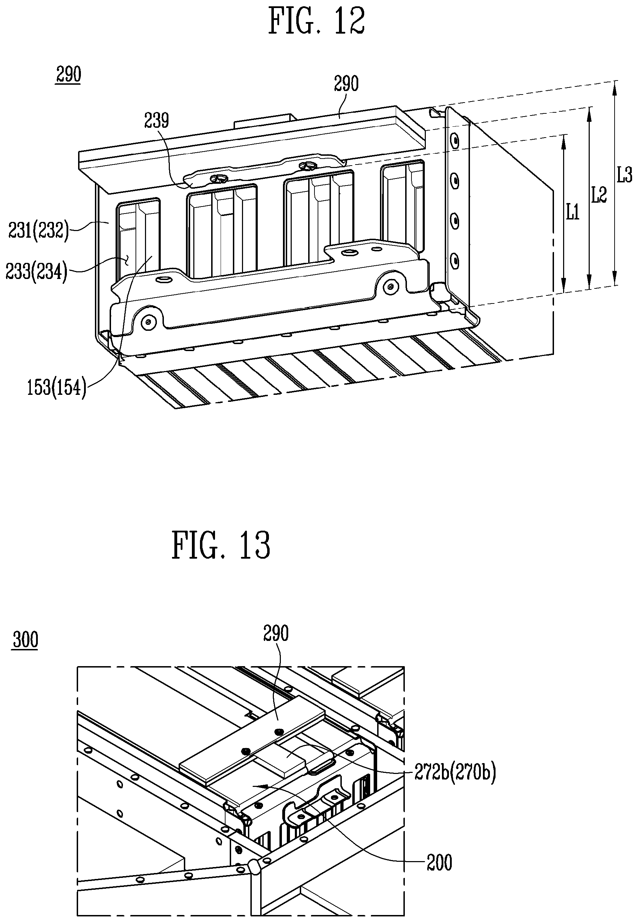

Referring to FIG. 11, the connection member 270 may include a first surface 270b facing the plurality of battery cells 100 and the second surface 270a coupled to the first surface 270b (see FIG. 13).

Alternatively, the connection member 270 may include the first surface 270b facing the support cover portion 210 and the second surface 270a coupled to the first surface 270b.

More specifically, the second strip 272 may include a strip first surface 272b facing the plurality of battery cells 100 and a strip second surface 272a (see FIG. 13) coupled to the strip first surface 272b. Alternatively, the second strip 272 may include the strip first surface 272b facing the support cover portion 210 and the strip second surface 272a coupled to the strip first surface 272b.

When the cell detector 290 is located in the first area A1, the second surface 270a or the strip second surface 272a may be exposed to the outside.

The connection member 270 includes the first surface 270b facing the plurality of battery cells 100, and the second surface 270a positioned in a direction opposite to the first surface 270b and coupled to the first surface 170b. When the cell detector 290 is positioned in the second area A2, at least a part of the connection member 270 may be bent such that the second surface 270a may face the first surface 270a.

Referring to FIGS. 3 and 11, the battery pack 300 according to the present disclosure includes the plurality of battery cells 100, the busbar 150 electrically connecting the plurality of battery cells 10, the sensor 250 electrically connected to the plurality of battery cells 100, the cell detector 290 measuring voltages or currents in the plurality of battery cells 100 by the sensor 250, a pack case 305 accommodating the plurality of battery cells 100, the busbar 150, the sensor 250 and the cell detector 290 therein, and a controller 700 provided in the pack case 305 and exchange electrical signals with the cell detector 290. The cell detector 290 may be located in the first area A1 formed between one side surface of the pack case 306 and the plurality of battery cells 100.

The controller 700 and the cell detector 290 may wirelessly exchange the electrical signal.

Referring to FIG. 11, the controller 700 is located in the battery pack 300. However, the controller 700 may also be located outside the battery pack 300. The controller 700 may manage the state of the battery module 200 and the battery cell 100 accommodated in the battery module 200 by the cell detector 290. The controller 700 may be referred to as a battery management system (BMS) in another term.

The battery pack 300 may include a plurality of battery modules 200. In order to prevent heat or flame generated by one of the plurality of battery modules 200 from propagating to other battery modules 200, the plurality of battery modules 200 may be disposed in separation spaces 398 (see FIG. 14) separated from each other inside the battery pack 300. Therefore, in order to prevent the separation spaces 398, separated from each other, from communicating with each other, it may be preferable that the cell detector 290 included in each of the plurality of battery modules 200 be connected wirelessly to the controller 700 rather than wiredly.

FIG. 12 illustrates an example of the cell detector 290, the support portion 239, and the venting holes 233 and 234 according to the present disclosure.

The cell detector 290 may further include a wireless communication module (not shown) in order for the cell detector 290 to be wirelessly connected to the controller 700. This may mean that the size of the cell detector 290 (specifically, the volume of the housing 295) is increased. Considering the increased size, it may be preferable that the cell detector 290 is located in the first area A1.

However, when the cell detector 290 is mounted in the battery pack 300 in a state that the cell detector 290 is positioned in the first area A1 (or coupled to the first support member 2391 and the second support member 2392), the cell detector 290 may interfere with other components of the battery pack 300 during assembly.

In order to prevent this, before being assembled into the battery pack 300, the cell detector 290 may be located in the second area A2 above the plurality of battery cells 100, inserted into the inside of the battery pack 300, and then moved to the first area A1 to couple the cell detector 290 to the support portion 239.

That is, the method of assembling the battery pack 300 according to the present disclosure may include: arranging the cell detector 290 in the second area A2 formed above the plurality of battery cells 100 in the height direction of the pack case 305 to accommodate the plurality of battery cell in the pack case 305; and arranging the cell detector 290 in the first area A1 formed between the plurality of battery cells 100 and the pack case 301,.

The first side cover 231 and the second side cover 232 may further include the venting holes 233 and 234, respectively, so that the gas generated during thermal runaway may be quickly discharged in the direction of the first side cover 231 or the second side cover 232.

The first busbar frame 153 or the second busbar frame 154 may be exposed to the outside through the venting holes 233 and 234, respectively.

In order to prevent the cell detector 290 from overlapping the venting holes 233 and 234 to cover the venting holes 233 and 234, the first area A1 may be located above the venting holes 233 and 234. Therefore, a height L1 to the support portion 239 based on the lowermost end of the battery module 200 may be greater than the maximum height of the venting holes 233 and 234.

In addition, a height L3 of the battery module 200 to the uppermost end thereof based on the lowermost end thereof may be greater than a maximum height L2 of the cell detector 290.

FIG. 13 illustrates an example in which the cell detector 290 is disposed in the second area A2 after the battery module 200 according to the present disclosure is accommodated in the battery pack 300.

FIG. 13 illustrates a state in which the battery module 200 is simply accommodated in the battery pack 300 and is not yet assembled with the battery pack 300.

Therefore, the cell detector 290 may be located in the first area A1.

In contrast to when the cell detector 290 is located in the first area A1, at least a part of the second surface 270a or at least a part of the strip second surface 272a may be exposed to the outside.

In other words, when the cell detector 290 is located in the second area A2, at least a part of the second surface 270a may be bent to face the first surface 270b.

Alternatively, when the cell detector 290 is located in the second area A2, at least a part of the strip second surface 272a may be bent to face the strip first surface 272b.

FIG. 14 illustrates an example of the battery pack 300 according to the present disclosure.

The battery pack 300 may include the pack case 305 which accommodates the plurality of battery modules 200 therein.

The pack case 305 may include a pack body 390 which includes an opening 399 having an open surface and forms an internal space accommodated by the plurality of battery modules 200 through the opening 399, and a pack cover 310 which is coupled to the pack body 390 to close the opening 399.

The pack body 390 may include a pack bottom surface 395 forming a bottom surface of the interior space, and the pack side surfaces 391, 392, 393, and 394 extending from one edge of the pack bottom surface 395 to form side surfaces of the interior space.

The cell detector 290 may be disposed in the first area A1 located between the battery module 200 including the cell detector 290 and the pack side surfaces.

The internal space may be divided into the plurality of separation spaces 398 accommodating the plurality of battery modules 200, respectively. To this end, the battery pack 300 may further include a partitioning portion 330 which partitions the internal space into the plurality of separation spaces 398.

The partitioning portion 330 may include a first frame 335 and a second frame 331 extending in the first direction (the X direction) and the second direction (the Y direction) perpendicular to the height direction (the Z direction) of the pack case 305, respectively.

According to an embodiment of the present disclosure, the stability of a battery module and/or a battery pack is improved even when the thermal runaway of a battery cell occurs.

According to another embodiment of the present disclosure, interference between a movement path of gas generated during thermal runaway of the battery cell and other components is reduced.

According to another embodiment of the present disclosure, ease of assembly of the battery module and/or the battery pack is improved.

According to another embodiment of the present disclosure, the space of the battery pack is efficiently utilized.

Some aspects of the present disclosure are as follows:
Aspect 1: A battery module comprising: a plurality of battery cells 100 arranged in a predetermined stacking direction; a busbar 150 electrically connecting the plurality of battery cells; a sensor 250 electrically connected to the plurality of battery cells 100 through the busbar 150; and a cell detector 290 measuring voltages or currents in the plurality of battery cells 100 by the sensor 250, wherein the cell detector 290 is arranged in a first area A1 provided on a side of the plurality of battery cells.
Aspect 2: The battery module according to Aspect 1, further comprising: a side cover portion 230 forming a side surface of an accommodation space accommodating the plurality of battery cells 100; and a support portion 239 protruding from the side cover portion 230 in a direction away from the plurality of battery cells 100 to support the cell detector 290 when the cell detector 290 is located in the first area A1.
Aspect 3: The battery module according to Aspect 2, wherein the cell detector 290 comprises: a circuit portion 299 connected to the sensor 250; and a housing 295 accommodating the circuit portion 299 therein.
Aspect 4: The battery module according to Aspect 3, wherein the support portion 239 includes a coupling hole 239h formed in the support portion 239 in a height direction perpendicular to the predetermined stacking direction, wherein the cell detector 29 includes an engaging portion 296 protruding from the housing 295, and wherein the cell detector 290 is coupled to the support portion 239 by inserting the engaging portion 296 into the coupling hole 239h.
Aspect 5: The battery module according to Aspect 4, wherein the engaging portion 296 is provided in a hook shape, and the engaging portion 296 is hook-coupled to the coupling hole 239h.
Aspect 6: The battery module according to any one of Aspects 3 to 5, wherein the housing 295 comprises: a first body 291 in contact with the support portion 239; and a second body 292 coupled to the first body 291 and accommodating the circuit portion 299 inside together with the first body 291.
Aspect 7: The battery module according to any one of Aspects 2 to 6, wherein the side cover portion 230 includes a venting hole 233, 234 penetrating at least a portion of the side cover portion 230.
Aspect 8: The battery module according to Aspect 7, wherein the cell detector 290 is located above the venting hole 233, 234 in a height direction perpendicular to the predetermined stacking direction.
Aspect 9: The battery module according to Aspects 7 or 8, wherein the first area A1 is located between the second area A2 and the venting hole 233, 234.
Aspect 10: The battery module according to any one of Aspects 1 to 9, further comprising a connection member 270 including a flexible material and electrically connecting the sensor 250 and the cell detector 290.
Aspect 11: The battery module according to Aspect 10, wherein the connection member extends from the sensor 250 toward the cell detector 290 and has a strip shape.
Aspect 12: The battery module according to Aspect 11, wherein the connection member 270 comprises: a first surface 270b facing the plurality of battery cells 100; and a second surface 270a located in a direction opposite to the first surface 270b and coupled to the first surface 270b, and wherein when the cell detector 290 is located in the second area A2, at least a portion of the connection member 270 is bent such that the second surface faces 270a the first surface 270b.
Aspect 13: The battery module according to any one of Aspects 1 to 12, wherein each of the plurality of battery cells 100 comprises: an electrode assembly 105 producing or storing electrical energy; a cell case accommodating the electrode assembly 105; and a first lead tab portion 101 and a second lead tab portion 102 protruding from the cell case and electrically connecting the electrode assembly 105 and the busbar 150, wherein the sensor 250 comprises: a first sensing terminal 251 electrically connected to the first lead tab 101; and a second sensing terminal 252 electrically connected to the second lead tab 102, and wherein the cell detector 290 is electrically connected to the first sensing terminal 251 and the second sensing terminal 252.
Aspect 14: The battery module according to Aspect 13, further comprising a side cover portion 230 including a first side cover 231 and a second side cover 232 facing each other while interposing the plurality of battery cells 100 in the stacking direction, wherein the cell detector 290 is located close to one of the first side cover 231 and the second side cover 232.
Aspect 15: The battery module according to Aspect 14, wherein the busbar 150 comprises: a first busbar 151 electrically connected to the first lead tab portion 101; and a second busbar 152 electrically connected to the second lead tab 102, and wherein the cell detector 290 is located close to one of the first busbar 151 and the second busbar 152.

The present disclosure may be modified and implemented in various forms, and its scope is not limited to the above-described embodiments. The content described above is merely an example of applying the principles of the present disclosure, and other features may be further included without departing from the scope of embodiments according to the present disclosure.

## Claims

1. A battery module comprising:
a plurality of battery cells (100) arranged in a predetermined stacking direction;
a busbar (150) electrically connecting the plurality of battery cells;
a sensor (250) electrically connected to the plurality of battery cells (100) through the busbar (150); and
a cell detector (290) measuring voltages or currents in the plurality of battery cells (100) by the sensor (250),
wherein the cell detector (290) is arranged in a first area (A1) provided on a side of the plurality of battery cells.

2. The battery module according to claim 1, further comprising:
a side cover portion (230) forming a side surface of an accommodation space accommodating the plurality of battery cells (100); and
a support portion (239) protruding from the side cover portion (230) in a direction away from the plurality of battery cells (100) to support the cell detector (290) when the cell detector (290) is located in the first area (A1).

3. The battery module according to claim 2, wherein the cell detector (290) comprises:
a circuit portion (299) connected to the sensor (250); and
a housing (295) accommodating the circuit portion (299) therein.

4. The battery module according to claim 3, wherein the support portion (239) includes a coupling hole (239h) formed in the support portion (239) in a height direction perpendicular to the predetermined stacking direction,
wherein the cell detector (290) includes an engaging portion (296) protruding from the housing (295), and
wherein the cell detector (290) is coupled to the support portion (239) by inserting the engaging portion (296) into the coupling hole (239h).

5. The battery module according to claim 4, wherein the engaging portion (296) is provided in a hook shape, and the engaging portion (296) is hook-coupled to the coupling hole (239h).

6. The battery module according to any one of claims 3 to 5, wherein the housing (295) comprises:
a first body (291) in contact with the support portion (239); and
a second body (292) coupled to the first body (291) and accommodating the circuit portion (299) inside together with the first body (291).

7. The battery module according to any one of claims 2 to 6, wherein the side cover portion (230) includes a venting hole (233, 234) penetrating at least a portion of the side cover portion (230).

8. The battery module according to claim 7, wherein the cell detector (290) is located above the venting hole (233, 234) in a height direction perpendicular to the predetermined stacking direction.

9. The battery module according to claims 7 or 8, wherein the first area (A1) is located between the second area (A2) and the venting hole (233, 234).

10. The battery module according to any one of claims 1 to 9, further comprising a connection member (270) including a flexible material and electrically connecting the sensor (250) and the cell detector (290).

11. The battery module according to claim 10, wherein the connection member extends from the sensor (250) toward the cell detector (290) and has a strip shape.

12. The battery module according to claim 11, wherein the connection member (270) comprises:
a first surface (270b) facing the plurality of battery cells (100); and
a second surface (270a) located in a direction opposite to the first surface (270b) and coupled to the first surface (270b), and
wherein when the cell detector (290) is located in the second area (A2), at least a portion of the connection member (270) is bent such that the second surface faces (270a) the first surface (270b).

13. The battery module according to any one of claims 1 to 12, wherein each of the plurality of battery cells (100) comprises:
an electrode assembly (105) producing or storing electrical energy;
a cell case accommodating the electrode assembly (105); and
a first lead tab portion (101) and a second lead tab portion (102) protruding from the cell case and electrically connecting the electrode assembly (105) and the busbar (150),
wherein the sensor (250) comprises:
a first sensing terminal (251) electrically connected to the first lead tab (101); and
a second sensing terminal (252) electrically connected to the second lead tab (102), and
wherein the cell detector (290) is electrically connected to the first sensing terminal (251) and the second sensing terminal (252).

14. The battery module according to claim 13, further comprising a side cover portion (230) including a first side cover (231) and a second side cover (232) facing each other while interposing the plurality of battery cells (100) in the stacking direction,
wherein the cell detector (290) is located close to one of the first side cover (231) and the second side cover (232).

15. The battery module according to claim 14, wherein the busbar (150) comprises:
a first busbar (151) electrically connected to the first lead tab portion (101); and
a second busbar (152) electrically connected to the second lead tab (102), and
wherein the cell detector (290) is located close to one of the first busbar (151) and the second busbar (152).
